# EUROPÄISCHE PATENTSCHRIFT

(11) **EP 1 180 211 B1**
(45) Veröffentlichungstag und Bekanntmachung des Hinweises auf die Patenterteilung: **03.08.2005**
(21) Anmeldenummer: 00929507.2
(22) Anmeldetag: 06.05.2000
(51) Int. Cl.: F02M 61/04, F02M 61/08, F02M 61/18, F02B 3/12, F02M 45/08

(54) **VERFAHREN ZUM EINSPRITZEN VON KRAFTSTOFF UND EINSPRITZVENTIL ZUR DURCHFÜHRUNG DES VERFAHRENS**
METHOD FOR INJECTING FUEL AND INJECTION VALVE FOR CARRYING OUT SAID METHOD
PROCEDE POUR INJECTER DU CARBURANT ET SOUPAPE D'INJECTION PERMETTANT DE METTRE EN OEUVRE LEDIT PROCEDE

(30) Priorität: 19.05.1999 DE 19922964
(43) Veröffentlichungstag der Anmeldung: 20.02.2002
(73) Patentinhaber: DaimlerChrysler AG, 70567 Stuttgart (DE)
(72) Erfinder: KÖNIG, Gerhard, D-73111 Lauterstein (DE); ÖING, Heinz, D-26892 Dörpen (DE); RENNER, Gregor, D-70619 Stuttgart (DE)
(86) Internationale Anmeldenummer: PCT/EP2000/004087
(87) Internationale Veröffentlichungsnummer: WO 2000/071886

(56) Entgegenhaltungen:
- DE-A- 2 837 606
- DE-A- 19 606 087
- DE-U- 8 521 912
- GB-A- 1 521 065
- US-A- 4 195 783

## Beschreibung

Die Erfindung betrifft ein Verfahren zum Einspritzen von Dieselkraftstoff in den Brennraum einer Brennkraftmaschine und ein Einspritzventil zur Durchführung des Verfahrens.

In der DE 196 06 087 A1 ist eine Kraftstoffeinspritzdüse der eingangs erwähnten Art beschrieben, die eine Vielzahl erster Einspritzöffnungen und eine Vielzahl zweiter Einspritzöffnungen in einem nach außen sich öffnenden Ventilstößel aufweist. Ziel der vorbekannten Kraftstoffeinspritzdüse ist es, die Wirksamkeit der Kraftstoffverbrennung zu steigern, wenn sich der Motor mit hoher Geschwindigkeit dreht.

Ähnliche Ausgestaltungen von Einspritzventilen sind aus der DE 44 42 764 A1 und der GB 2 113 303 A bekannt.

In der DE 43 40 883 A1 ist ebenfalls eine Einspritzdüse mit einem nach außen sich öffnenden Ventilstößel beschrieben, in dessen Schließkopf zwei oder mehr parallele Kanäle zum Einspritzen von Kraftstoff angeordnet sind, die durch eine Trennwand voneinander getrennt sind und die beim Öffnungshub nacheinander von einer Steuerkante freigegeben werden. Ziel dieser Ausgestaltung ist es, die Strahlrichtung bei der konventionellen Dieseleinspritzung d.h. in der Hauptphase der Verbrennung, unabhängig davon ob ein oder beide Kanäle geöffnet sind beizubehalten.

In der DE 198 15 266 A1 ist ein Verfahren zur Einspritzung von Otto-Kraftstoff in eine Brennkraftmaschine beschrieben, wobei für eine Ladungsschichtung Kraftstoff spät nachgeführt wird, um einen Katalysator aufzuheizen.

Die DE 197 07 811 A1 betrifft ein Verfahren zur Reduzierung der Stickoxide im Abgas einer Kraftstoff einspritzenden Brennkraftmaschine, wobei eine Kraftstoffeinspritzung in einem Modus durchgeführt wird, dass eine entsprechende Abgasnachbehandlung zur Reduzierung der Stickstoffoxide möglich wird.

Aus der DE 691 01 739 T2 ist ein Einspritzgerät für einen Verbrennungsmotor für zwei Kraftstoffe, nämlich Benzin- und Dieselkraftstoff, bekannt, wofür zwei getrennt gesteuerte Düsennadeln vorgesehen sind.

Normalerweise wird bei einem Dieselmotor zunächst die Luft komprimiert und anschließend in die komprimierte heiße Luft Kraftstoff eingespritzt, der sofort zünden soll. In das bereits brennende Kraftstoff-Luft-Gemisch wird dann weiter Kraftstoff eingespritzt. Die Gemischbildung wird im wesentlichen dadurch erreicht, dass die mit einem hohen Impuls eingespritzten Strahlen auf die Muldenwand des Kolbens treffen und dort umgelenkt werden, damit sich eine starke turbulente Wirkung einstellt. Auf diese Weise erhält man praktisch eine sehr gute Durchmischung und damit eine Gemischbildung während der laufenden Verbrennung.

Dieses Verfahren funktioniert an den meisten Betriebspunkten, insbesondere bei der Betriebsweise für die der Motor optimiert ist, relativ gut. Eine optimale Vermischung von Kraftstoff und Sauerstoff ist jedoch in praktisch keinem Fall gewährleistet, so dass die Gefahr von überfetteten Kraftstoffzonen und damit von erhöhter Rußbildung bzw. die Gefahr von nahezu stöchiometrisch gemischten Zonen und damit von sehr hohen Verbrennungstemperaturen und somit erhöhter thermischer Stickoxidbildung besteht.

Der vorliegenden Erfindung liegt daher die Aufgabe zugrunde, ein Verfahren der eingangs erwähnten Art derart zu verbessern, dass dieses in allen Lastbereichen eine verbesserte Gemischbildung und damit eine gute Wirksamkeit gewährleistet. Der Erfindung liegt auch die Aufgabe zugrunde, ein Einspritzventil zur Durchführung des erfindungsgemäßen Verfahrens zu schaffen.

Erfindungsgemäß wird diese Aufgabe durch die im kennzeichnenden Teil von Anspruch 1 genannten Merkmale verfahrensgemäß gelöst. In Anspruch 6 ist ein erfindungsgemäßes Einspritzventil zur Durchführung des Verfahrens aufgezeigt.

Erfindungsgemäß wird nunmehr eine Vorhomogenisierung bereits vor Einsetzen der Selbstzündung und damit eine möglichst gleichmäßige Kraftstoffaufbereitung gewährleistet. Die Vorhomogenisierung durch Einspritzung von Kraftstoff über Voreinspritzöffnungen und die dadurch geschaffenen Voreinspritzstrahlen sind so umfangsmäßig über den Brennraum verteilt, dass sich eine gute Durchmischung des Kraftstoffes mit der vorhandenen Luft zu einem Zeitpunkt ergibt, in welchem Druck und Temperatur der verdichteten Luft noch keinen so hohen Wert haben, dass eine schnelle Zündung einsetzen würde. Dies bedeutet, es ist ausreichend Zeit für eine Kraftstoffzerstäubung vorhanden.

wird der Motor bei Teillast betrieben, so reicht die eingespritzte Kraftstoffmenge, welche z.B. bei dieser Vorhomogenisierung bis zu 50% des insgesamt einspritzbaren Kraftstoffes betragen kann, aus, um eine anschließende Selbstzündung zu erreichen mit einer Motorleistung, die für einen Teillastbetrieb ausreicht. Durch die vorangegangene intensive Vermischung von Luft mit Kraftstoff wird eine Rußbildung bei der Selbstzündung vermieden, da keine überfetteten Kraftstoffzonen vorhanden sind. Durch die erfindungsgemäße Kraftstoffaufbereitung lässt sich auch eine magere Mischung einstellen, wodurch auch nur eine minimale Stickoxidbildung eintritt. Gleichzeitig wird auf diese Weise der Motorwirkungsgrad besser bzw. der Kraftstoffverbrauch niedriger.

Das erfindungsgemäße Verfahren funktioniert jedoch auch in Verbindung mit annähernd Vollastbetrieb und auch bei Vollastbetrieb.

In diesem Falle wird durch die Voreinspritzung, die insbesondere 100° vor dem oberen Totpunkt des dazugehörigen Kolbens bis ca. 30° vor dem oberen Totpunkt erfolgt, ebenfalls eine gleichmäßige Kraftstoffaufbereitung erreicht. Um anschließend den oberen Teillastbereich oder auch Vollastbereich zu erreichen, muss der erfindungsgemäße Homogenbetrieb im Teillastbereich mit der bekannten konventionellen Einspritzstrategie kombiniert werden, da es hier auf einen hohen Strahlimpuls, intensive Strahl-/Wandinteraktion sowie eine möglichst gute Luftausnutzung und turbulente Mischung ankommt.

Dies wird erfindungsgemäß nun dadurch erreicht, dass durch über den Umfang verteilt angeordnete Haupteinspritzöffnungen Hauptstrahlen zugeschaltet werden. Wichtig ist dabei, dass sich aus den Voreinspritzstrahlen und den Hauptstrahlen gemeinsame Strahlenbündel ergeben, welche sich bei vollständig geöffneter Düse jeweils wie ein Strahl aus einer großen Einspritzöffnung verhalten.

Erfindungsgemäß ist dabei vorgesehen, dass die Voreinspritzöffnungen, die entsprechend Voreinspritzstrahlen erzeugen, bezüglich ihrer Richtungen und dem Einspritzwinkel so angeordnet sind, dass der aus einer Haupteinspritzöffnung austretende Hauptstrahl die ihm jeweils zugeordneten Voreinspritzstrahlen in sich integriert.

Die Erfinder haben dabei in überraschender Weise festgestellt, dass bei einer entsprechenden Anordnung der Einspritzöffnungen und Zuordnung der Durchmesserverhältnisse, wobei die Haupteinspritzöffnungen deutlich größere Durchmesser besitzen als die Voreinspritzöffnungen, von den Hauptstrahlen aufgrund deren höheren Impulse und der daraus resultierenden höheren Eindringgeschwindigkeit ein Saugeffekt auftritt, durch den die Voreinspritzstrahlen angesaugt und sich damit mit dem jeweils diesem zugeordneten Hauptstrahl zu einem gemeinsamen Strahl vereinigen lassen, so dass sich über den Umfang verteilt einheitliche Strahlenbündel ergeben.

Die Durchmesserverhältnisse zwischen Haupteinspritzöffnung und Voreinspritzöffnung können zwischen 2:1 und 6:1 betragen. Selbstverständlich sind jedoch im Rahmen der Erfindung auch noch andere Werte möglich.

Falls es für einen Vollastbetrieb zu einer Haupteinspritzung kommt, wird man in vorteilhafter Weise zwischen der Voreinspritzung und der Haupteinspritzung eine oder mehrere Einspritzpause(n) dazwischen schalten, womit sich die homogene Vermischung noch besser durchführen lässt.

In einer sehr vorteilhaften konstruktiven Ausgestaltung lässt sich dieses Verfahren mit einem Einspritzventil durchführen, bei welchem die Möglichkeit geschaffen wird, dass während der Einspritzphase ein nach außen öffnender Ventilstößel kurzzeitig eine Gegenbewegung durchführen kann, durch die die Voreinspritzöffnungen kurzzeitig nochmals geschlossen werden, um die gewünschte Einspritzpause zu erzeugen. Es hat sich dabei herausgestellt, dass für diese Aufgabe ein Einspritzventil besonders geeignet ist, bei dem zur Bewegung des Ventilstößels eine piezokeramische Betätigungseinrichtung vorgesehen ist. Im Unterschied zu einem druckgesteuerten System, bei welchem man nicht so genau positionieren kann, erlaubt es eine piezokeramische Betätigungseinrichtung auch Zwischenstellungen anzufahren.

Vorteilhafte Weiterbildungen und Ausgestaltungen ergeben sich aus den übrigen Unteransprüchen und aus dem nachfolgend anhand der Zeichnung prinzipmäßig beschriebenen Ausführungsbeispiel.

Es zeigt:
- Fig. 1: den unteren Teil eines Einspritzventiles im Teillastbetrieb;
- Fig. 2: den unteren Teil des Einspritzventils nach Fig. 1 in Vollastbetrieb;
- Fig. 3: eine vergrößerte Darstellung des unteren Bereiches des Einspritzventils mit Einspritzöffnungen im Teillastbetrieb;
- Fig. 4: eine vergrößerte Darstellung des unteren Bereiches des Einspritzventils mit Einspritzöffnungen im Vollastbetrieb;
- Fig. 5: die Zuordnung einer Haupteinspritzöffnung gegenüber drei Voreinspritzöffnungen, die eine Einheit bilden;
- Fig. 6: eine Prinzipdarstellung der Verteilung von Voreinspritzstrahlen in einem Brennraum in der Draufsicht;
- Fig. 7: eine Seitenansicht der Strahlenbündelverteilung bei oberem Teillast- und Vollastbetrieb; und
- Fig. 8: eine Draufsicht auf die Strahlenbündelverteilung gemäß Fig. 7.

Grundsätzlich ist der Aufbau und die Wirkungsweise eines Einspritzventiles 1 allgemein bekannt, weshalb zur Erläuterung der Erfindung nur dessen unterer Bereich dargestellt ist. Das Einspritzventil 1 ist in einem Ventilgehäuse 2 angeordnet. Im Inneren des Einspritzventiles 1 ist ein von einem Ventilschaft 3 umgebener Ventilstößel 4, auch Ventilnadel genannt, angeordnet. Zwischen dem Ventilschaft 3 und dem Ventilstößel 4 befindet sich ein Ringraum 5, über den Kraftstoff unter Druck zugeführt wird.

Der Ventilstößel 4 wird von einem nur gestrichelt angedeuteten Piezostack als piezokeramischer Betätigungseinrichtung 6 in und gegen die Öffnungsrichtung des Ventiles betätigt. Funktion und Wirkungsweise der piezokeramischen Betätigungseinrichtung 6, welche auf einer Längenänderung des Piezostacks bei Bestromung basiert, sind allgemein bekannt.

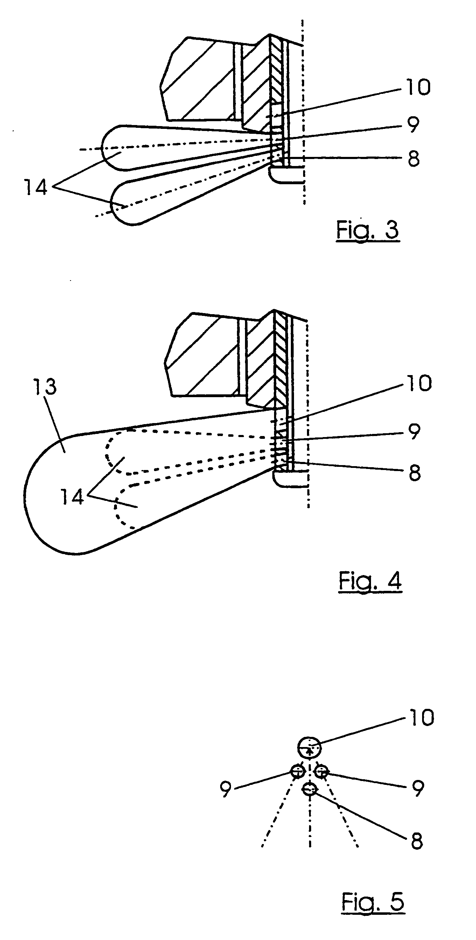

Aus den vergrößerten Darstellungen der Figuren 3, 4 und 5 ist ersichtlich, dass der Ventilstößel 4 an seinem in den Brennraum 7 ragenden Ende mit einer Vielzahl von kleinen über den Umfang verteilt angeordneten Voreinspritzöffnungen 8 und 9 versehen ist. Die Voreinspritzöffnungen 8 bilden dabei eine untere Reihe, während die Voreinspritzöffnungen 9 eine obere Reihe bilden. Die Längsachsen der zu den Voreinspritzöffnungen 8 und 9 führenden Einspritzkanäle sind unter-schiedlich zur Ventillängsachse geneigt.

Über der oberen Reihe von Voreinspritzöffnungen 9 sind ebenfalls über den Umfang verteilt angeordnete Haupteinspritzöffnungen 10 angeordnet.

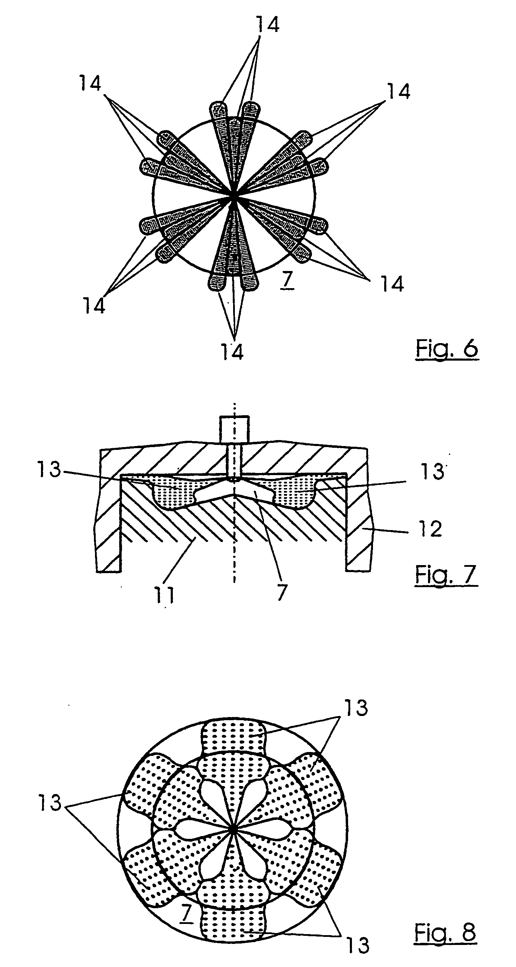

Aus der Fig. 5 ist ersichtlich, dass jeweils einer Haupteinspritzöffnung 10 drei Voreinspritzöffnungen, nämlich zwei Voreinspritzöffnungen 9 der oberen Reihe und eine Voreinspritzöffnung 8 der unteren Reihe, zugeordnet sind. Selbstverständlich ist diese Anzahl und Zuordnung nur beispielsweise gewählt, im Bedarfsfalle können auch nur jeweils zwei Voreinspritzöffnungen einer Haupteinspritzöffnung 10 zugeordnet sein, ebenso wie auch mehrere Voreinspritzöffnungen 8 und 9 einer Haupteinspritzöffnung 10 zugeordnet sein können. Dies hängt jeweils von den örtlichen Gegebenheiten und der Größe des Brennraumes 7 bzw. des dazugehörigen Kolbens 11 und Zylinders 12 ab.

Die Durchmesserverhältnisse zwischen Haupteinspritzöffnung 10 und Voreinspritzöffnungen 8 bzw. 9 können 2:1 bis 6:1 betragen. Auch hier sind selbstverständlich im Bedarfsfalle noch andere Werte möglich. Wesentlich ist lediglich, dass sich eine derartige Einstellung ergibt, dass Kraftstoff jeweils über die Haupteinspritzöffnung 10 mit einem derartigen Impuls eingespritzt wird, dass sich ein Hauptstrahl 13 ergibt, der eine Sogwirkung auf die von den Einspritzöffnungen 8 und 9 erzeugten Voreinspritzstrahlen 14 bewirkt.

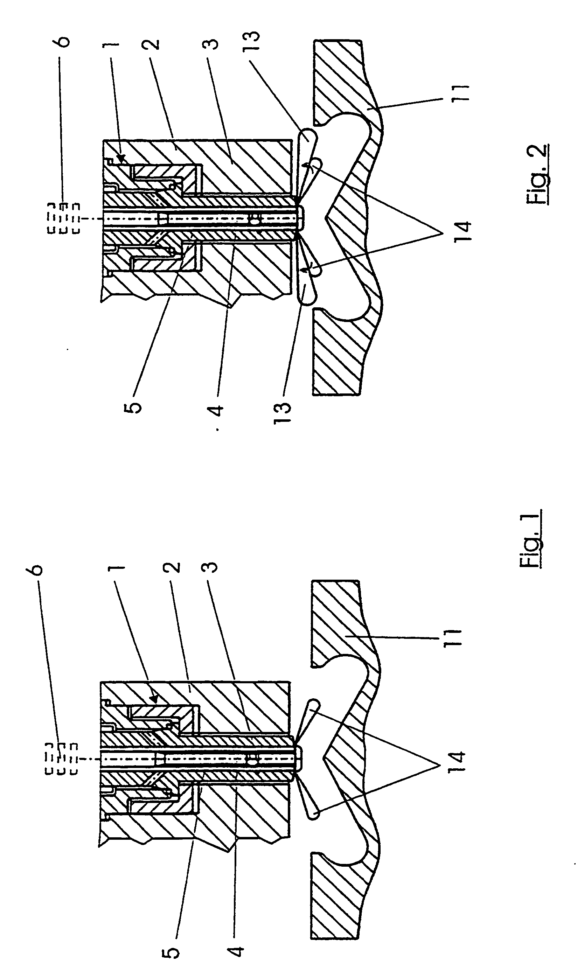

Aus Fig. 1 und deutlicher aus Fig. 3 sind die Voreinspritzstrahlen 14 klar ersichtlich.

Fig. 4 zeigt wie die Voreinspritzstrahlen 14 unter teilweiser Ablenkung aufgrund der Sogwirkung durch den impulsstärkeren Hauptstrahl 13 in dem Hauptstrahl 13 integriert sind und damit jeweils einheitliche über den Umfang und damit über den Brennraum 7 verteilte Strahlenbündel ergeben.

Aus der Fig. 6 ist die Verteilung der Voreinspritzstrahlen 14 in dem Brennraum 7 in der Draufsicht ersichtlich. Die Einspritzung zur (Vor-)Homogenisierung erfolgt während des Kompressionshubes des Kolbens 11 und zwar eventuell ausschließlich im (unteren) Teillastbereich oder auch in Kombination mit einer Haupteinspritzung über die Haupteinspritzöffnung 10 bei allen anderen Lastbereichen.

Die Figuren 7 und 8 zeigen die Verteilung der aus den Hauptstrahlen 13 geschaffenen Strahlenbündel im Brennraum 7, wobei jeweils in den Hauptstrahlen 13 die Voreinspritzstrahlen 14 integriert sind. Wie ersichtlich, wird somit im oberen Teillastbereich und im Vollastbereich eine intensive Strahl-/Wandinteraktion erreicht, welche somit in Übereinstimmung mit dem konventionellen Verfahren steht. Die Haupteinspritzung über die Haupteinspritzöffnungen 10 kann dabei üblicherweise bei wenigstens annähernd 15° vor dem oberen Totpunkt des dazugehörigen Kolbens 11 bis annähernd 20° nach dem oberen Totpunkt erfolgen.

Damit auch im oberen Teillastbereich und im Vollastbereich eine sehr gute Vorhomogenisierung erreicht wird, wird das Einspritzventil 1 durch die piezokeramische Betätigungseinrichtung 6 so gesteuert, dass nach einer oder mehrerer Voreinspritzphase(n), welche in einem Bereich von ca. 100° bis 30° vor dem oberen Totpunkt erfolgen kann bzw. können, kurzzeitig eine oder mehrere Gegenbewegung(en), d.h. Schließbewegung(en) auf den Ventilstößel 4 ausgeübt wird bzw. werden, durch den die Voreinspritzöffnungen 8 und 9 nochmals abgedeckt werden. Dies bedeutet, es entsteht bzw. entstehen eine oder mehrere Einspritzpause(n) bis z.B. die Haupteinspritzung bei 15° vor dem oberen Totpunkt des dazugehörigen Kolbens 11 durch eine erneute so große Öffnungsbewegung des Ventilstößels 4 erfolgt, dass sowohl die Voreinspritzöffnungen 8 und 9 als auch die Haupteinspritzöffnungen 10 freigegeben werden.

Aus der Fig. 4 ist weiterhin ersichtlich, dass die Einspritzrichtung jeder Haupteinspritzöffnung 10 so gerichtet ist, dass diese zwischen die ihr zugeordneten Voreinspritzöffnungen 8 und 9 und der daraus resultierenden Voreinspritzstrahlen 14 gerichtet ist und diese damit zur Bildung von jeweils einem gemeinsamen Hauptstrahl bzw. von gemeinsamen über den Umfang verteilten Strahlenbündeln in sich aufnimmt.

## Patentansprüche

1. Verfahren zum Einspritzen von Dieselkraftstoff in den Brennraum einer Brennkraftmaschine über eine Einspritzdüse mit mehreren übereinander bzw. in Öffnungsrichtung der Einspritzdüse hintereinander angeordneten Lochreihen,
**dadurch gekennzeichnet,**
**dass** im Teillastbereich über wenigstens eine erste Reihe von Voreinspritzöffnungen (8,9) über den Umfang verteilt Voreinspritzstrahlen (14), deren Winkel unterschiedlich zur Ventillängsachse geneigt sind, vor Einsetzen der Selbstzündung derart in den Brennraum (7) eingespritzt werden, dass eine wenigstens weitgehende homogene Mischung aus Luft und Kraftstoff entsteht, wobei in der wenigstens ersten Reihe der Voreinspritzöffnungen (9) wenigstens doppelt so viele Voreinspritzöffnungen (9) wie Haupteinspritzöffnungen (10) vorgesehen sind, und dass bei wenigstens annähernd Vollastbetrieb zusätzlich durch weitere über den Umfang verteilt angeordnete Haupteinspritzöffnungen (10) Hauptstrahlen (13) derart in den Brennraum (7) eingespritzt werden, dass jeder Hauptstrahl (13) gemeinsam mit jeweils wenigstens zwei diesem zugeordneten Voreinspritzstrahlen (14), die wenigstens weitgehend in dem jeweils dazugehörigen Hauptstrahl (13) zur Bildung eines gemeinsamen Strahles integriert werden, gebildet wird, womit sich ein über den Umfang verteilt angeordnetes Strahlenbündel aus den einzelnen Hauptstrahlen (13) ergibt.

2. Verfahren nach Anspruch 1,
**dadurch gekennzeichnet,**
**dass** zwischen der Voreinspritzung und der Haupteinspritzung wenigstens eine Einspritzpause besteht.

3. Verfahren nach Anspruch 1 oder 2,
**dadurch gekennzeichnet,**
**dass** die Voreinspritzung ununterbrochen oder in mehreren Phasen erfolgt, zwischen denen jeweils eine Einspritzpause besteht.

4. Verfahren nach Anspruch 2 oder 3,
**dadurch gekennzeichnet,**
**dass** die Voreinspritzung über die Voreinspritzöffnungen (8,9) in einem Bereich von circa 100° bis 30° vor dem oberen Totpunkt des dem Brennraum (7) zugeordneten Kolbens (11) erfolgt.

5. Verfahren nach einem der Ansprüche 1 bis 4,
**dadurch gekennzeichnet,**
**dass** die Haupteinspritzung wenigstens annähernd 15° vor dem oberen Totpunkt bis wenigstens annähernd 20° nach dem oberen Totpunkt des dem Brennraum (7) zugeordneten Kolbens (11) erfolgt.

6. Einspritzventil zur Durchführung des Verfahrens nach einem der Ansprüche 1 bis 5, das einen nach außen öffnenden Ventilstößel aufweist, der an seinem vorderen Ende wenigstens zwei in axialer Richtung hintereinander angeordnete Reihen von über den Umfang verteilt angeordneten Einspritzöffnungen aufweist,
**dadurch gekennzeichnet,**
**dass** wenigstens eine Reihe mit Voreinspritzöffnungen (9) vorgesehen ist, in der wenigstens doppelt so viele Voreinspritzöffnungen (9) wie Haupteinspritzöffnungen (10) vorgesehen sind, wobei jeweils einer Haupteinspritzöffnung (10) wenigstens zwei Voreinspritzöffnungen (8,9) zugeordnet sind, wobei die Haupteinspritzöffnung (10) in Öffnungsrichtung hinter den Voreinspritzöffnungen (8,9) liegt, wobei mit einer ersten axialen Verschiebung des Ventilstößels (4) die Voreinspritzöffnungen (8,9) aktivierbar sind und bei wenigstens annähernd Vollastbetrieb durch eine weitere axiale Verschiebung des Ventilstößels (4) die Haupteinspritzöffnungen (10) aktivierbar sind, und wobei die Winkel der Voreinspritzöffnungen (8,9) unterschiedlich zur Ventillängsachse geneigt sind.

7. Einspritzventil nach Anspruch 6,
**dadurch gekennzeichnet,**
**dass** zum Einspritzen von Kraftstoff über die Voreinspritzöffnungen (8,9) der Ventilstößel (4) in Öffnungsrichtung verstellbar, in einer oder mehreren Einspritzpause(n) während der Voreinspritzung und zwischen der Voreinspritzung und der Haupteinspritzung gegen die Öffnungsrichtung bewegbar und für die Haupteinspritzung wieder in Öffnungsrichtung verschiebbar ist.

8. Einspritzventil nach Anspruch 7,
**dadurch gekennzeichnet,**
**dass** für die Bewegung des Ventilstößels (4) vorzugsweise eine piezokeramische Betätigungseinrichtung (6) vorgesehen ist.

9. Einspritzventil nach einem der Ansprüche 6 bis 8,
**dadurch gekennzeichnet,**
**dass** die Einspritzrichtung jeder Haupteinspritzöffnung (10) jeweils zwischen die dieser zugeordneten wenigstens zwei durch die Voreinspritzöffnungen (8,9) erzeugten Voreinspritzstrahlen (14) zur Bildung eines gemeinsamen Hauptstrahls (13) gerichtet ist.

10. Einspritzventil nach einem der Ansprüche 6 bis 9,
**dadurch gekennzeichnet,**
**dass** zwei übereinander liegende Reihen von Voreinspritzöffnungen (8,9) vorgesehen sind, wobei jeweils wenigstens zwei Voreinspritzöffnungen (8,9) der oberen und eine der unteren Reihe (8) einer Haupteinspritzöffnung (10) zugeordnet sind, die in Öffnungsrichtung hinter den Voreinspritzöffnungen (8, 9) liegt.

11. Einspritzventil nach einem der Ansprüche 5 bis 8,
**dadurch gekennzeichnet,**
**dass** die Durchmesserverhältnisse der jeweils größeren Haupteinspritzöffnung (12) zu den dieser zugeordneten kleineren Voreinspritzöffnungen (8,9) zwischen 2:1 und 6:1 beträgt.

## Claims

1. A process for injecting diesel fuel into the combustion chamber of an internal combustion engine through an injector nozzle with several rows of holes positioned one above the other or one behind the other in the direction of opening of the injector nozzle,
**characterised in that**
in part-load operation pre-injection jets (14) distributed around the periphery and inclined at different angles in relation to the longitudinal axis of the injector are injected into the combustion prior to the start of self-ignition through at least a first row of pre-injection openings (8, 9) in such a manner that an at least largely homogenous mixture consisting of air and fuel is created, at least twice as many pre-injection openings (9) as main injection openings (10) being provided in the at least first row of pre-injection openings (9), and in addition at almost approx. full-load operation main jets (13) are injected into the combustion chamber through further main injection openings (10) distributed around the periphery in such a manner as to form each main jet (13) together with at least two associated pre-injection jets (14) which are at least largely integrated into the corresponding main jet (13) in order to form a joint jet, thereby producing a cluster of jets comprising the individual main jets (13) which are distributed around the periphery.

2. A process in accordance with claim 1,
**characterised in that**
there is at least one injection pause between pre-injection and main injection.

3. A process in accordance with claim 1 or 2,
**characterised in that**
pre-injection takes place either without interruption or in several phases between which there is an injection pause.

4. A process in accordance with claim 2 or 3,
**characterised in that**
pre-injection takes place through the pre-injection openings (8, 9) in a range of approx. 100° to 30° before top dead centre of the piston (11) assigned to the combustion chamber (7).

5. A process in accordance with one of claims 1 to 4,
**characterised in that**
main injection takes place between at least approx. 15° before top dead centre and at least approx. 20° after top dead centre of the piston (11) assigned to the combustion chamber (7).

6. An injector for carrying out the process disclosed in one of claims 1 to 5 having an outward-opening tappet, the front end of which has at least two rows, positioned one behind the other axially, of injection openings distributed about the periphery,
**characterised in that**
at least one row is provided with pre-injection openings (9) in which are provided at least twice as many pre-injection openings (9) as main injection openings (10), at least two pre-injection openings (8, 9) being assigned to one main injection opening (10), the main injection opening (10) lying behind the pre-injection openings (8, 9) in the direction of opening, it being possible to activate the pre-injection openings (8, 9) by means of a first axial movement of the tappet (4), in at least approximately full-load operation it being possible to activate the main injection openings (10) by means of a further axial movement of the tappet (4), and the angle of the pre-injection openings (8, 9) being inclined differently in relation to the longitudinal axis of the injector.

7. An injector in accordance with claim 6,
**characterised in that**
in order to inject fuel through the pre-injection openings (9), it is possible to move the tappet (4) in the direction of opening, in one or more injection pauses(s) during pre-injection and between pre-injection and main injection counter to the direction of opening, and for main injection back in the direction of opening.

8. An injector in accordance with claim 7,
**characterised in that**
a piezo ceramic actuating device (6) is preferably provided for moving the tappet (4)

9. An injector in accordance with one of claims 6 to 8,
**characterised in that**
the direction of injection of each main injection opening (10) is directed between the at least two pre-injection jets (14) associated with said main injection opening (10) produced by the at least two pre-injection openings (8, 9) in order to form a joint main jet (13).

10. An injector in accordance with one of claims 6 to 9,
**characterised in that**
two rows of pre-injection openings (8, 9) are provided one above the other, at least two pre-injection openings (8, 9) in the upper row and one in the lower row (8) being assigned to a main injection opening (10) which lies behind the pre-injection openings (8, 9) in the direction of opening.

11. An injector in accordance with one of claims 5 to 8,
**characterised in that**
the ratio of the diameter of the larger main injection opening (12) to that of the smaller pre-injection openings (8, 9) is between 2:1 and 6:1).

## Revendications

1. Procédé pour injecter du carburant diesel dans la chambre de combustion d'un moteur à combustion interne par une buse d'injection présentant plusieurs rangées de trous agencées les unes au-dessus des autres ou les unes derrière les autres en direction d'ouverture de la buse d'injection, **caractérisé en ce que** dans la plage de charge partielle, des jets de préinjection (14) dont l'angle est incliné différemment par rapport à l'axe longitudinal de soupape sont injectés dans la chambre de combustion (7) par au moins une première rangée d'ouvertures de préinjection (8, 9) en répartition périphérique, et ceci avant le début de l'auto-allumage, de telle sorte qu'il se forme un mélange au moins largement homogène d'air et de carburant, et dans ladite au moins une première rangée d'ouvertures de préinjection (9), il est prévu au moins deux fois plus d'ouvertures de préinjection (9) que d'ouvertures d'injection principale (10), et **en ce que** lors du fonctionnement au moins approximativement en pleine charge, des jets principaux (13) sont injectés en supplément dans la chambre de combustion (7) via d'autres ouvertures d'injection principale (10) agencées en répartition périphérique, de telle sorte que chaque jet principal (13) est formé conjointement avec au moins deux jets de préinjection (14) respectifs associés à celui-ci qui sont intégrés au moins largement dans le jet principal respectif associé (13) pour former un jet commun, dont résulte un faisceau de jets constitué par les jets principaux individuels (13), qui est agencé en répartition périphérique.

2. Procédé selon la revendication 1, **caractérisé en ce qu'**il est prévu au moins une pause d'injection entre la préinjection et l'injection principale.

3. Procédé selon l'une ou l'autre des revendications 1 et 2, **caractérisé en ce que** la préinjection s'effectue sans interruption ou en plusieurs phases entre lesquelles est prévue une pause d'injection respective.

4. Procédé selon l'une ou l'autre des revendications 2 et 3, **caractérisé en ce que** la préinjection s'effectue via les ouvertures de préinjection (8, 9) dans une plage d'environ 100° à 30° avant le point mort haut du piston (11) associé à la chambre de combustion (7).

5. Procédé selon l'une des revendications 1 à 4, **caractérisé en ce que** l'injection principale s'effectue depuis au moins approximativement 15° avant le point mort haut jusqu'à au moins approximativement 20° après le point mort haut du piston (11) associé à la chambre de combustion (7).

6. Soupape d'injection pour mettre en oeuvre le procédé selon l'une des revendications 1 à 5, qui comprend un poussoir de soupape s'ouvrant vers l'extérieur qui présente à son extrémité avant au moins deux rangées, agencées l'une derrière l'autre en direction axiale, d'ouvertures d'injection agencées en répartition périphérique, **caractérisée en ce qu'**il est prévu au moins une rangée d'ouvertures de préinjection (9) dans laquelle sont prévues au moins deux fois plus d'ouvertures de préinjection (9) que d'ouvertures d'injection principale (10), à chaque ouverture d'injection principale (10) sont associées au moins deux ouvertures de préinjection (8, 9), l'ouverture d'injection principale (10) se trouve, en direction d'ouverture, en arrière des ouvertures de préinjection (8, 9), les ouvertures de préinjection (8, 9) sont susceptibles d'être activées par une première translation axiale du poussoir de soupape (4), et lors du fonctionnement au moins approximativement en pleine charge les ouvertures d'injection principale (10) sont susceptibles d'être activées par une translation axiale supplémentaire du poussoir de soupape (4), les angles des ouvertures de préinjection (8, 9) étant inclinés différemment par rapport à l'axe longitudinal de soupape.

7. Soupape d'injection selon la revendication 6, **caractérisée en ce que** pour injecter du carburant via les ouvertures de préinjection (8, 9), le poussoir de soupape (4) est déplaçable dans la direction d'ouverture, dans une ou plusieurs pause(s) d'injection pendant la préinjection, et entre la préinjection et l'injection principale il est déplaçable en sens inverse à la direction d'ouverture et pendant l'injection principale il est de nouveau déplaçable dans la direction d'ouverture.

8. Soupape d'injection selon la revendication 7, **caractérisée en ce que** pour le mouvement du poussoir de soupape (4), il est prévu de préférence un dispositif d'actionnement piézocéramique (6).

9. Soupape d'injection selon l'une des revendications 6 à 8, **caractérisée en ce que** la direction d'injection de chaque ouverture d'injection principale (10) est dirigée entre lesdits au moins deux jets de préinjection respectifs (14) associés à celle-ci et générés par les ouvertures de préinjection (8, 9), afin de former un jet principal commun (13).

10. Soupape d'injection selon l'une des revendications 6 à 9, **caractérisée en ce qu'**il est prévu deux rangés superposées d'ouvertures de préinjection (8, 9), au moins deux ouvertures de préinjection respectives (8, 9) de la rangée supérieure et une de la rangée inférieure (8) étant associées à une ouverture d'injection principale (10) qui se trouve, en direction d'ouverture, en arrière des ouvertures de préinjection (8, 9).

11. Soupape d'injection selon l'une des revendications 5 à 8, **caractérisée en ce que** les rapports des diamètres entre l'ouverture d'injection principale respective (12) plus grande et les ouvertures de préinjection (8, 9) plus petites associées à celle-ci est compris entre 2:1 et 6:1.
